# EUROPEAN PATENT APPLICATION

(11) **EP 4 606 660 A1**
(43) Date of publication of application: **27.08.2025**
(21) Application number: 25158704.4
(22) Date of filing: 18.02.2025
(51) Int. Cl.: B60T 11/10

(54) **IMPROVED ADAPTOR FOR TRAILER BRAKE CIRCUIT**

(30) Priority: 21.02.2024 IT 202400003607
(71) Applicant: CNH Industrial Italia S.p.A., 10156 Torino (IT)
(72) Inventor: Pescione, Fabio, 10156 Turin (IT); Noce, Francesco, 10156 Turin (IT)
(74) Representative: CNH Industrial IP Department

(57) **Abstract**

Adaptor (1) for connecting a tractor brake hydraulic circuit comprising a tractor brake valve (2) and a trailer brake hydraulic circuit, the adaptor (1) comprise sensor means (10) configured to generate a control signal when the adaptor (1) is connected to the tractor brake valve (2), the sensor means (10) comprising a plunger (11) carried by one between the adaptor (1) and the tractor brake valve (2) and a switch (12) carried by the other between the adaptor (1) and the tractor brake valve (2).

## Description

### TECHNICAL FIELD

The present invention concerns a hydraulic brake arrangement for work vehicles.

The present invention finds its preferred, although not exclusive, application in trailer brake arrangements, in particular for agricultural field. Reference will be made to this application by way of example below.

### BACKGROUND OF THE INVENTION

Agricultural vehicles such as tractors are provided with trailers that could need to be braked. Accordingly, it is known to provide hydraulic arrangement that allow braking of the trailer via tractor hydraulic braking system.

Each country usually developed a specific regulation with respect to the control of the trailer brake arrangement. In Italy, for instance, trailer brake system should respect the requirements of the so-called CUNA regulation.

In particular, such trailer brake arrangements usually comprise a single line that was designed to be controlled to a specific pressure value.

In order to harmonize the regulations within European Union and to increase safety in agricultural field, the so-called "Mother Regulation" has been issued. In the near future, it would no more possible to provide hydraulic arrangements that are solely voted to control a trailer realized according to CUNA regulation.

Therefore, it is requested to provide adaptators or to modify existing trailer brake circuits to allow the coupling of trailers that are realized according to Mother Regulation requirements or to CUNA requirements.

An aim of the present invention is to satisfy the above mentioned needs in a cost-effective and optimized manner.

### SUMMARY OF THE INVENTION

The aforementioned aim is reached by an adaptor and a tractor-trailer assembly and a related control method as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:

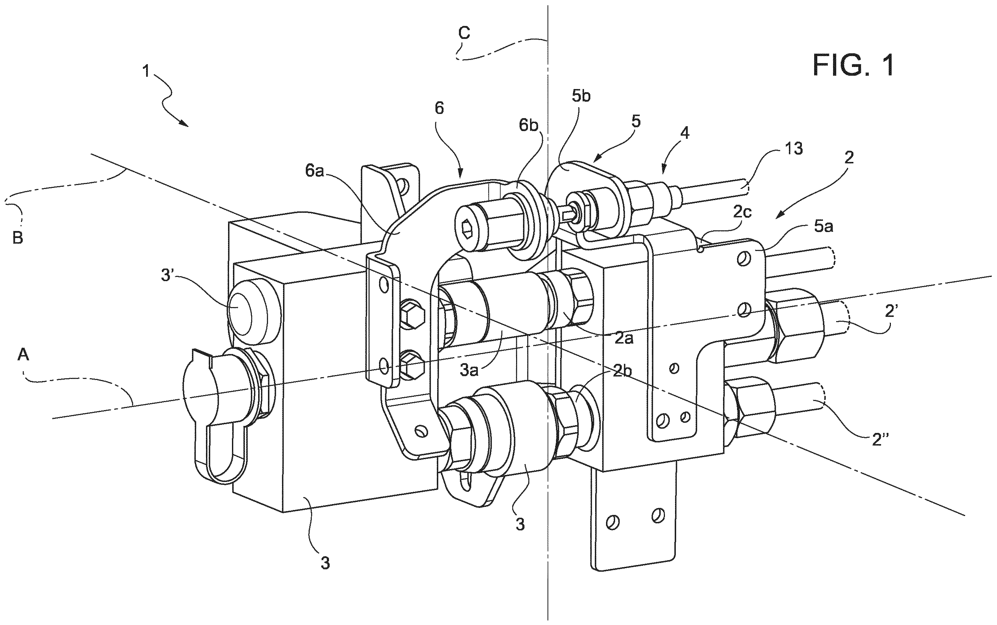

- Figure 1 is a perspective view of an adaptor according to the invention; and

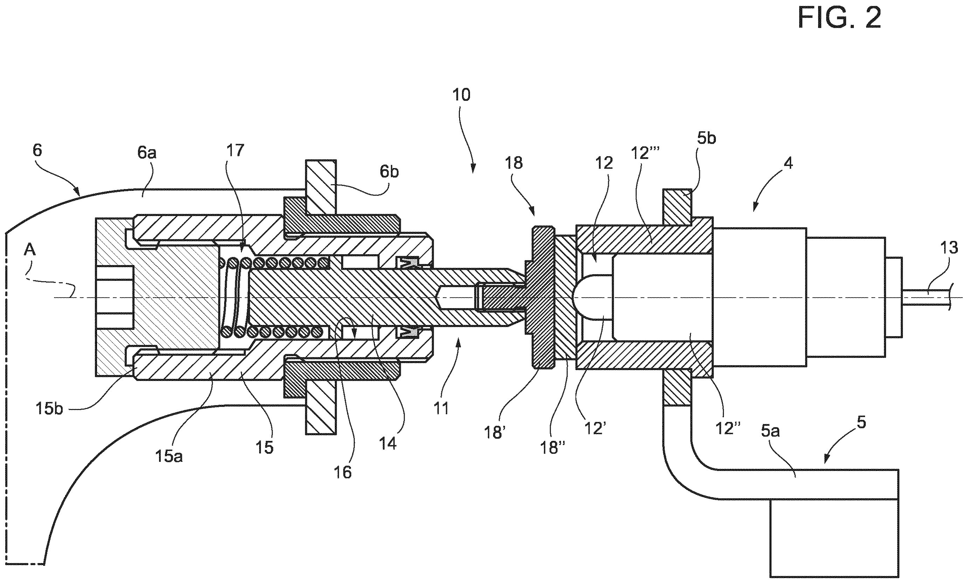

- Figure 2 is a schematic cross-section of the adaptor of figure 1.

### DETAILED DESCRIPTION OF THE INVENTION

The attached figures disclose an adaptor 1 for being used in a tractor-trailer assembly (not shown) for connecting a tractor brake hydraulic arrangement to a trailer brake hydraulic arrangement.

Adaptor 1 is configured to allow fluidic connection between a control line 2' and a supplementary line 2'' of a tractor brake hydraulic circuit realized according to dual line/mother regulation standard and a trailer line 3' of a trailer brake hydraulic circuit realized according to single line/CUNA regulation standard.

In detail, the adaptor 1 is configured to cooperate with a brake valve 2 of the tractor that defines a pair of ports 2a, 2b configured to be fluidly connected, respectively to control line and supplementary line 2', 2''; the adaptor 1 therefore defines a pair of ports 3a, 3b configured to be fluidly connected to the ports 2a, 2b of the brake valve 2 and fluidly connected to the trailer line 3'.

Per se, brake valve 2 and ports 3a, 3b, 2a, 2b can be realized in any known typology and therefore will be not described further in detail.

In particular, it is noticed that brake valve 2 comprises a body 2c that defines ports 2a, 2b and similarly the adaptor 1 comprises a body 3 that defines ports 3a, 3b.

The above described assembly furthermore comprises sensor means 10 configured to detect the coupling of the adaptor 1 to the brake valve 2, i.e. to detect that the ports 2a, 2b of the brake valve 2 are coupled to ports 3a, 3b of the body 3, as described in the following.

In detail, sensor means 10 comprises a plunger 11 carried by one between the adaptor 1 and the brake valve 2 and a switch 12 configured to be actuated by the plunger 11 carried by the other between the adaptor 1 and the brake valve means 2.

Advantageously, the plunger 11 is carried by the adaptor 1 while the switch 12 is carried by the brake valve 2.

Preferably, the plunger 11 is carried by a first bracket 6 fixedly carried by body 3 of the adaptor 1 and similarly the switch 12 is carried by a second bracket 5 fixedly carried the body 2c of the valve 2.

In detail, both the plunger 11 and the switch 12 are carried fixedly by respectively the first and second brackets 6, 5.

In detail, each bracket 5, 6 comprises a fixation portion 6a, 5a and a cantilevered portion 6b, 5b. In detail, the fixation portion 6a, 5a comprises a plate portion that is faced to one of the face of body 2c, 3 of the brake valve 2/ adaptor 1.

Similarly, the cantilevered portion 6b, 5b comprises a plate portion that is fixedly carried by the fixation portion 6a, 5a and extending transversally with respect to this latter.

In particular, imagining the direction of coupling of adaptor 1 to brake valve 2 along a longitudinal axis A, the cantilevered portions 6b, 5b extends along a transversal axis B, in particular a perpendicular axis with respect to such longitudinal axis A direction.

In detail, the coupling portions 6b, 5b extends over the bodies 2c, 3 along a vertical axis C direction, i.e. a direction transversal and preferably perpendicular to longitudinal and transversal axes, A, B.

Moreover, the cantilevered portions 6b, 5b extends getting away from bodies 2c, 3 along the transversal axis B direction. Preferably, bodies 2c, 3 are fixed to their respectively support portions on the side opposite to the one faced to the fixation portions 6a, 5a.

The plunger 11 and the switch 12 are preferably carried within openings realized in the cantilevered portions 6b, 5b.

Making reference to switch 12, it comprises a movable portion 12' movably carried by a housing 12''. The housing 12'' is fixedly housed by the cantilevered portion 5b, e.g. by threaded means (not shown). In particular, housing 12'' may comprises a hub portion 12‴ configured to surround the movable portion 12' radially about longitudinal axis A to protect this latter from unwanted contacts.

The movable portion1 12' is realized as a button that can therefore move with respect to the housing 12'' in order to assume an engage or disengaged position, corresponding, in particular to a compressed or released position. As described better below, the compression or release is realized along longitudinal axis A.

In particular, the movable portion 12', when engaged, is configured to generate an electric signal, such as an ON-OFF signal.

As shown, for instance, the electric signal is transmitted to an electronic control unit of the tractor brake hydraulic circuit by wire 13.

The plunger 11 essentially comprises an actuation rod 14 movably carried by a housing 15 and configured to cooperate at contact with the movable portion 12' of the switch 12.

In detail, the actuation rod 14 is housed by a housing 15 that is carried by the protruding portion 6b, in particular in slidingly manner along longitudinal axis A. The housing 15 in particular is made of at least two elements, a main portion 15a fixedly carried, e.g. via threaded means, by the protruding portion 6b and a removable cab 15b coupled in a resealable manner to the main portion 15a. The housing 15 therefore defines a space 16 where the actuation rod 14 is partially housed and can slide.

In particular, the plunger 11 comprises preload means 17, such as spring means 17, configured to provide a force to an extremity of the actuation rod 14 opposite to the one cooperating with the switch 12 in order to push this latter against the switch, in use.

In particular, preload means 17 are housed within the space 16 so that can act to the extremity opposite to switch 12 in order to impart the aforementioned force.

The plunger 11 further comprises a contact portion 18 carried by the actuation rod 14 and configured to cooperate at contact with the switch 12, namely the movable portion 12'.

In detail, the contact portion 18 comprises a support portion 18' fixedly carried by an extremity of the actuation rod 14, e.g. threaded thereon, and a deformable portion 18'' fixedly carried by the support portion 18'.

The deformable portion 18'' is realized in a material that can deform under action of a load, such as rubber or any suitable material, in particular polymeric material.

In detail, in use, the deformable portion 18'' is dimensioned in order to cooperate at contact with movable portion 12' of the switch 12 and with the housing 12'', in particular with the hub portion 12''' thereof.

In detail, the deformable portion 18'' is dimensioned to cooperate with a preset interference with the movable portion 12', i.e. providing a pre-set load thereto.

The operation of the embodiment of the invention as described above is the following.

When the brake valve 2 is coupled to a trailer provided with a dual line/mother regulation hydraulic circuit, no signal is provided by switch 12 therefore the operation of valve 2 is standard thereby exchanging fluid between the two control and supplementary lines of both the tractor and the trailer.

When the brake valve 2 is coupled to a trailer provided with a single line/CUNA regulation hydraulic circuit, adaptor 1 is used. When ports 3a, 3b of the coupler 1 are coupled to the ports 2a, 2b of the brake valve 2, then the plunger 11 contacts the switch 12 that send a signal via wire to the electronic control unit of the tractor that control by consequence the operation of brake valve 2 to provide fluid from the control and supplementary lines 2', 2'' of the tractor to the single line 3' of the trailer.

In particular, the preload means 17 provide a load to the actuation rod 14 that is pushed against the movable portion 12' of the switch 12. Any excessive load is discharged on the housing 12', in particular hub portion 12''', of the switch 12.

In view of the foregoing, the advantages of a coupler and a tractor-trailer assembly and the related control method according to the invention are apparent.

Thanks to the proposed system it is possible to safely and quick detect the coupling of a single line trailer brake hydraulic circuit to a dual line tractor brake hydraulic circuit.

Indeed, the plunger 11 allows to contact the switch 12 in a safe and constant manner, also taking into account tolerances and vibrations during the use of the tractor.

In fact, the presence of an actuation rod pushed by preload means against the switch, allows to maintain the contact between these latter even considering mounting tolerances and in case of vibrations.

In particular, the presence of a contact portion made of deformable material with a preset interference with the movable portion of the switch guarantees such contact.

Moreover, the fact that the deformable portion of the contact portion has a contact with the housing, allows furthermore a safe operation of the adaptor 1. Indeed, an excessive compression during the mounting of adaptor 1 to the valve 2 or due to vibration during the operation of the tractor, would be absorbed by the deformable portion that is in contact with the housing and not on the movable portion of the switch.

The above, avoid failures of the switch during connection and disconnection of the trailer to the tractor.

Moreover, since the provided plunger and switch are easily mounted and inspectable on the respective brackets, their maintenance is facilitated with consequent economy of time and costs.

Similarly, deformable portion can be easily substituted when excessively consumed, with consequent economy of costs.

It is clear that modifications can be made to the described hydraulic arrangement, tractor and tractor-trailer assembly and related control method which do not extend beyond the scope of protection defined by the claims.

In particular, the shown shapes of the elements of the coupler and of the brake valve may vary. Clearly, the single line trailer hydraulic circuit may be of any typology of single valve trailer, as the one cited for example according to CUNA regulation.

Moreover, the cited housings can be realized by different elements and the preload means may be of any typology.

Similarly, the contact portion 18 may be absent or substituted by equivalent means.

## Claims

1. Adaptor (1) for connecting a tractor brake hydraulic circuit comprising a tractor brake valve (2) and a trailer brake hydraulic circuit, said adaptor (1) comprising a body (3) defining a first and a second ports (3a, 3b) configured to be connected to respective first and second ports (2a, 2b) of said tractor brake valve (2) along a longitudinal axis (A), said body (3) fluidly connecting said first and second ports (3a, 3b) to a single line (3') of said trailer brake hydraulic circuit, said first and second ports (2a, 2b) of said tractor brake valve (2) being fluidly connected to respectively a control and a supplementary line (2', 2'') of said tractor brake hydraulic circuit, said adaptor (1) comprise sensor means (10) configured to generate a control signal when said adaptor (1) is connected to said tractor brake valve (2), said sensor means (10) comprising a plunger (11) carried by one between said adaptor (1) and said tractor brake valve (2) and a switch (12) carried by the other between said adaptor (1) and said tractor brake valve (2), said plunger (11) being configured to cooperate at contact with said switch (12) to generate said control signal when said first and second ports (3a, 3ab) of said body (3) are coupled to the first and second ports (2a, 2b) of said tractor brake valve (2).

2. Adaptor according to claim 1, wherein said plunger (11) is carried by said body (2) and said switch (12) is carried by said tractor brake valve (2), said plunger (11) comprises an actuation rod (14) movably carried within a housing (15) carried by said body (3) and said switch (12) comprising a movable portion (12') movably carried within a housing (12'') carried by said tractor brake valve (2), said plunger (11) further comprising preload means (17) configured to impart a force to said actuation rod (14) in order to maintain, in use, said actuation rod (14) in contact to said movable portion (12') of said switch (12).

3. Adaptor according to claim 2, wherein said preload means (17) comprise spring means.

4. Adaptor according to claim 2 or 3, wherein said actuation rod (14) is partially housed within a space (16) defined by said housing (15), said preload means (17) being housed within said space (16).

5. Adaptor according to any of claims 2 to 4, wherein said actuation rod (14) is configured to slide within said housing (15) along said longitudinal axis (A), said movable portion (12') being movably carried by said housing (12) to move along said longitudinal axis (A).

6. Adaptor according to any of claims 2 to 5, wherein said plunger (11) further comprising a contact portion (18) configured to cooperate at contact with said switch (12), said contact portion (18) comprising a deformable portion (18'') cooperating at contact, in use, with said movable portion (12').

7. Adaptor according to claim 6, wherein said deformable portion (18") is configured, in use, to cooperate at contact with interference with said movable portion (12').

8. Adaptor according to claim 6 or 7, wherein said deformable portion (18'') is furthermore configured to cooperate at contact with said a portion (12‴) of said housing (12') carrying said movable portion (12').

9. Adaptor according to claim 8, wherein said portion (12‴) is shaped to surround said movable portion (12') radially about said longitudinal axis (A).

10. Adaptor according to any of claims 6 to 9, further comprising a coupling portion (18') connected to said actuation rod (14) and carrying said deformable portion (18").

11. Adaptor according to any of claims 6 to 10, wherein said deformable portion (18") is made of rubber.

12. Adaptor according to any of the preceding claims, wherein said plunger (11) and said switch (12) are carried by brackets (6, 5) fixedly carried to respectively said body (3) and said tractor brake valve (2).

13. Adaptor according to claim 12, wherein said brackets (6, 5) are shaped to position said plunger (11) and said switch (12) faced to a side of said body (3) and said tractor brake valve (2) along a transversal axis (B) with respect to said longitudinal axis (A) and above said body (3) and said tractor brake valve (2) along a vertical axis (C) perpendicular to said longitudinal and transversal axis (A, B).

14. Assembly comprising a brake valve (2) and an adaptor (1) according to any of any of the preceding claims.

15. Tractor-trailer assembly comprising an assembly according to claim 14.
